# EUROPÄISCHE PATENTSCHRIFT

(11) **EP 0 510 406 B1**
(45) Veröffentlichungstag und Bekanntmachung des Hinweises auf die Patenterteilung: **21.12.1994**
(21) Anmeldenummer: 92105752.7
(22) Anmeldetag: 03.04.1992
(51) Int. Cl.: B29C 33/28

(54) **Formträger zur Herstellung von Formteilen aus Mehrkomponenten-Kunststoffen, insbesondere Polyurethan**
Device for holding moulds in the manufacture of articles made from multi-component plastic material, particularly polyurethane
Dispositif porte-moules pour la production de moulages en matière plastique à base de plusieurs composants, en particulier, en polyuréthane

(30) Priorität: 26.04.1991 DE 4113657
(43) Veröffentlichungstag der Anmeldung: 28.10.1992
(73) Patentinhaber: Heidel GmbH & Co. KG, D-49504 Lotte (DE)
(72) Erfinder: Denker, Ernst, W-4535 Westerkappeln (DE); Brinkmann, Christoph, W-2842 Lohne (DE)
(74) Vertreter: von Raffay, Vincenz, Dipl.-Ing.

(56) Entgegenhaltungen:
- EP-A- 0 281 724
- DE-A- 3 520 581
- US-A- 2 310 674
- US-A- 4 556 191
- KUNSTSTOFFBERATER Bd. 33, Nr. 5, Mai 1988, ISERNHAGEN (HANNOVER), DEUTSCHLAND Seite 22; 'Werkzeugträger für die Herstellung von PUR-Schaumteilen'

## Beschreibung

Die Erfindung betrifft einen Formenträger nach dem Oberbegriff des Patentanspruches 1.

Derartige Formenträger sind in den unterschiedlichsten Ausgestaltungen bekannt. Zum Stand der Technik gehört beispielsweise die DE-A-35 20 581 und die EP-A-321 591.

Die Bewegungen zwischen Unterform und Oberform erfolgen bei den bekannten Formenträgern in der unterschiedlichsten Weise. Wenn beispielsweise relativ große Pkw-Fußmatten hergestellt werden sollen, bei denen Schwerspatmatten doer -teppiche in die Form eingelegt und dann nach Schließen der Form hinterschäumt werden, so werden hierzu große und schwere Formenträger verwendet. Bei der Produktion wird in das Unterteil der Teppich eingelegt (entweder manuell oder automatisch). Hierbei ist es erforderlich, daß das Unterteil zum Einlegen und das Oberteil zum Reinigen, Trennen und ggf. ebenfalls Einlegen, möglichst gut zugänglich sind. Daran anschließend wird der Deckel geschlossen und das Reaktionsmaterial zum Hinterschäumen in die Form eingefüllt.

Bei einem bekannten Formenträger ist das Gestell, um das der die Oberform tragende Deckel schwenkbar ist, mit dem Unterteil fest verbunden. Hierdurch ist die Unterform selbst dann, wenn die Oberform noch relativ zu dem Deckel schwenkbar ist, nur bedingt frei zugänglich. Auch ist diese Konstruktion aufwendig und schwer.

Der Erfindung liegt daher die Aufgabe zugrunde, eine leichtere und einfachere Konstruktion zu schaffen, die darüberhinaus eine bessere Zugänglichkeit von Unter- und Oberform ermöglicht.

Diese Aufgabe wird grundsätzlich durch das Kennzeichen des Patentanspruches 1 gelöst.

Erfindungsgemäß wird das Gestell durch ein Hebelparallelogramm mit vier Schwenkpunkten gebildet. Die zwei unteren Schwenkpunkte liegen im Bereich der Unterform, vorzugsweise sind sie an dem Unterteil vorgesehen. Von diesen beiden Schwenkpunkten gehen zwei relativ langgestreckte Hebelarme aus, deren obere Schwenkpunkte durch einen normalerweise kürzeren Hebelarm gelenkig miteinander verbunden werden. Es entsteht so ein Parallelogramm, das um die beiden unteren Schwenkpunkte von der einen Seite des Unterteils zur anderen Seite schwenkbar ist, wobei die oberen Schwenkpunkte entsprechende Kreisbögen beschreiben. Der Deckel, den man auch als Oberteil bezeichnen kann, wird in herkömmlicher Weise durch die Kolben- und Zylindereinrichtung in Offenstellung geschwenkt, wobei das Hebelparallelogramm die eine Grundstellung auf der einen Seite einnimmt. Nach dem Hochschwenken des Deckels erfolgt die Verriegelung mit dem Hebelarm. Der Deckel ist dann nicht mehr relativ zu dem Hebelarm, der die beiden oberen Schwenkpunkte des Parallelogramms gelenkig verbindet, bewegbar. Wenn dann die Kolben- und Zylindereinrichtgung wieder betätigt wird, so wird sie an der Schwenkung des Deckels allein gehindert. Geschwenkt wird daher das Hebelparallelogramm mit dem Deckel um die beiden unteren Schwenkpunkte, wobei die erwähnten Kreisbahnen beschrieben werden. Hierdurch wird der Deckel aus einer ersten Offenstellung auf der einen Seite der Form in eine zweite Offenstellung auf der anderen Seite der Form geschwenkt. In dieser zweiten Stellung ist die Oberform leicht zum Reinigen, Trennen und gff. Einlegen zugänglich. In der ersten Stellung ist die Unterform auch zum automatischen Einlegen von Matten oder dergl. zugänglich, da der Deckel sich nicht mehr über der Unterform befindet, da das Hebelparallelogramm noch seine Ausgangsstellung auf der einen Seite der Form einnimmt. Sämtliche Bewegungen werden durch die eine hydraulische Kolben- und Zylindereinheit durchgeführt. Wenn beispielsweise der Deckel durch Ausfahren des Kolbens geöffnet wird, so erfolgt nach dem Verriegeln die Schwenkbewegung des Hebelparallelogramms in die andere Stellung durch Einfahren der Kolbenstange. Wenn die Form für einen neuen Arbeitsgang bereitgestellt werden soll, erfolgen die entsprechend umgekehrten Bewegungen.

Normalerweise sind Unterteil und Deckel von Unter- und Oberform getrennte Bauteile, d.h. Unter- und Oberform werden entsprechend eingehängt und sind auswechselbar. Es ist aber auch denkbar, daß die entsprechenden Teile einstückig ausgebildet sind, wenn beispielsweise eine Großserienproduktion erfolgt.

In den Ansprüchen 2 bis 8 sind vorteilhafte Ausgestaltungen unter Schutz gestellt. Wenn, wie in Anspruch 6 angegeben, eine weitere Schwenkbewegung der Unterform vorgesehen ist, so dient diese beispielsweise dazu, die Unterform nach dem Hochschwenken zu reinigen. Ob eine solche zusätzliche Schwenkbewegung gewünscht wird, hängt u.a. von der Gestalt und den Abmessungen des herzustellenden Formteils ab.

Bei einer praktischen Ausführungsform sind so, wie in Anspruch 8 angegeben, jeweils zwei Parallelogramme und zwei hydraulische Kolben- und Zylindereinrichtungen vorhanden, die je an einer Seite des Formenträgers angeordnet sind. Aus den Schwenkpunkten werden dann entsprechende Schwenkachsen.

Im folgenden wird die Erfindung unter Hinweis auf die Zeichnung anhand eines Ausführungsbeispieles näher erläutert.

Es zeigt:
- Fig. 1: eine Seitenansicht einer Ausführungsformen eines Formenträgers nach der Erfindung im geschlossenen Zustand;
- Fig. 2: eine der Fig. 1 entsprechende Seitenansicht, jedoch mit geöffnetem Deckel in der Stellung, in der die Unterform gut zugänglich ist;
- Fig. 3: eine den Fig. 1 und 2 entsprechende Seitenansicht, jedoch mit geöffnetem Deckel und geschwenktem Parallelogramm, so daß sich die Oberform in einer Stellung befindet, in der sie gut zugänglich ist; und
- Fig. 4: eine der Fig. 2 entsprechende Seitenansicht, jedoch mit einer weiteren Schwenkmöglichkeit der Unterform zur besseren Zugänglichkeit, beispielsweise zum Reinigen.

Der in den Zeichnungen dargestellte Formenträger besteht aus einem ortsfesten Unterteil 1 und einem schenkbaren Deckel 2, der auch als Oberteil bezeichnet werden kann. Die Schwenkbewegung des Deckels erfolgt durch zwei Kolben- und Zylindereinrichtungen 3, 13, von denen je eine an einer Seite des Formenträgers angeordnet ist. Die Zylinder 3 sind bei 11 schwenkbar mit dem Deckel 2 verbunden. Die Kolben 13 sind an dem Unterteil bei 12 schwenkbar gelagert.

Die mit dem Deckel verbundene Oberform ist mit 5 und die mit dem Unterteil 1 verbundene Unterform mit 6 bezeichnet. Grundsätzlich ist es auch möglich, Deckel 2 und Oberform 5 einstückig auszubilden.

Mit 4 ist ein Hebelparallelogramm bezeichnet, das durch vier Schwenkpunkte definiert ist. Es sind wiederum zwei Hebelparallelogramme, je eines an einer Seite des Formenträgers vorgesehen. Die ortsfesten Schwenkpunkte 17 und 18 liegen ungefähr in der Mitte des Formenträgers; sie sind an dem Unterteil 1 vorgesehen. Die beiden anderen, nicht ortsfesten Schwenkpunkte, sind mit 8 und 10 bezeichnet. Es sind zwei lange Hebel 14 und 15 und ein kurzer Hebelarm 16 vorgesehen. Wenn die Hebel 14 und 15 um die Schwenkpunkte 17 und 18 geschwenkt werden, so beschreiben die Schwenkpunkte 8 und 10 entsprechende Kreisbahnen. Aufgrund der gelenkigen Anordnung des Hebelarmes 16 bewegt sich dieser auf einer entsprechenden Kreisbahn, wobei er waagerecht bleibt.

Der Deckel 2 ist schwenkbar mit dem Hebelarm 16 verbunden, wobei bei der dargestellten Ausführungsform die Schwenkachse des Deckels mit dem Schwenkpunkt 8 oder besser, mit der Achse durch die beiden Schwenkpunkte 8 der beiden Hebelparallelogramme 4, zusammenfällt. An dem Deckel 2 ist ein Verriegelungspunkt 9 vorgesehen.

Zwischen Unterteil 1 und Unterform 6 ist ein Luftkissen 7 angeordnet, das in bekannter Weise mit Druckluft versorgt werden kann, um nach dem Schließen der Form die beiden Formhälften dicht zusammenzudrücken.

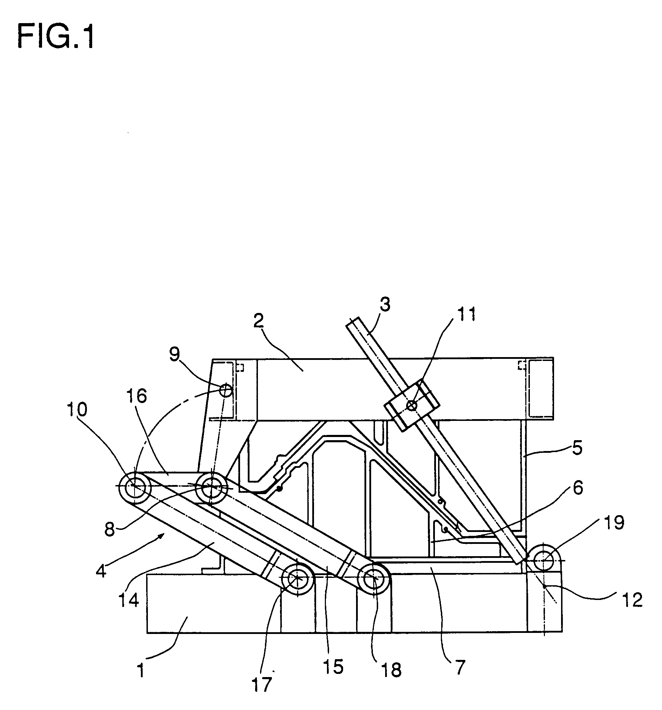

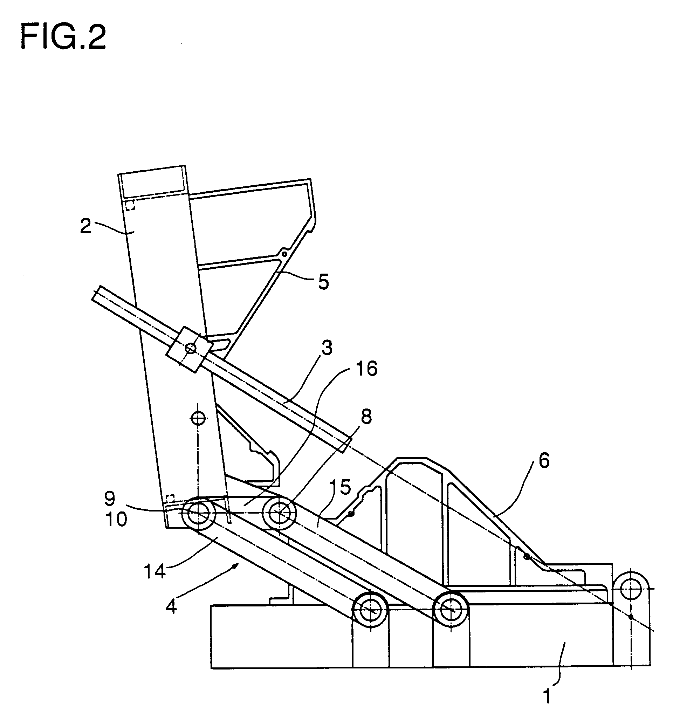

Wenn die in Fig. 1 geschlossenen dargestellten Form nun geöffnet werden soll, so werden die Kolben und die Zylindereinrichtungen 3, 13 betätigt, d.h. die Kolbenstange 13 wird ausgefahren. Der Deckel wird hierbei um die Achse 8 - 8 in die in Fig. 2 dargestellte Stellung geschwenkt. In dieser Stellung wird der Deckel 2 bei 9 mit dem Hebelarm 16 verriegelt, wobei vorzugsweise der Verriegelungspunkt 9 mit der Achse 10 - 10 zusammenfällt. Es ist leicht erkennbar, daß die Unterform in dieser Stellung gut zugänglich ist, beispielsweise um sie automatisch zu beschicken.

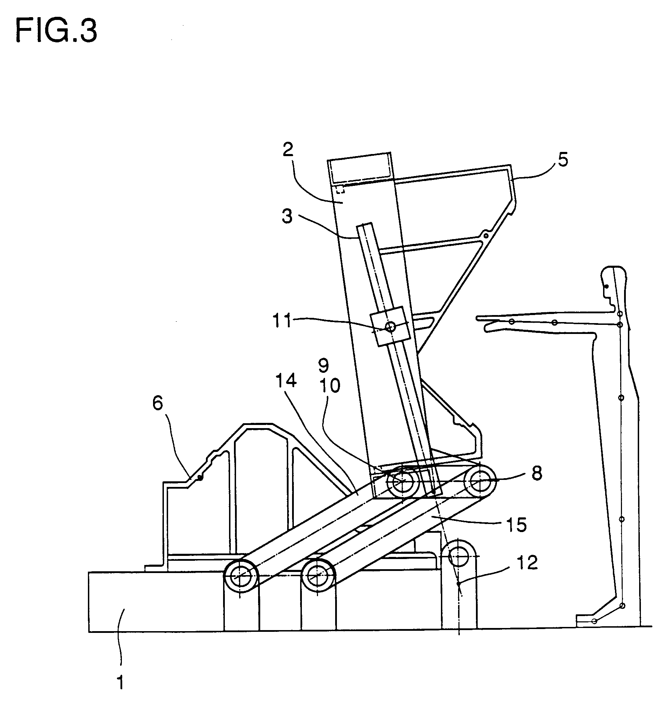

Wenn nach der Verriegelung des Deckels bei 9 mit dem Hebelarm 16 die Kolbenstange 13 wieder eingefahren wird, dann erfolgt die Schwenkbewegung des Deckels mit den beiden Hebelparallelogrammen 4, um die durch die Schwenkpunkte 17 und 18 definierten Achsen in die in Fig. 3 dargestellte Stellung. Es ist in dieser Stellung (siehe angedeutete Bedienungsperson) ohne Schwierigkeiten möglich, die Oberform zu erreichen, um beispielsweise einen Formling zu entnehmen und diese zu reinigen.

Dadurch, daß das ungefähr mittig an dem Unterteil befestigte Hebelparalellogramm 4 vorgesehen ist, mit dem der Deckel verriegelbar ist, ist es möglich, mit einer Kolben- und Zylindereinrichtung sowohl den Deckel in Offenstellung zu schwenken, als auch den Deckel nach dem Öffnen in die in Fig. 3 dargestellte Entnahme- und Reinigungsstellung zu schwenken. Hierdurch sind verhältnismäßig wenig schwere und aufwendige Bauteile vorhanden, so daß der Formenträger insgesamt leicht ist und dennoch sehr vorteilhafte Schwenkbewegungen ermöglicht.

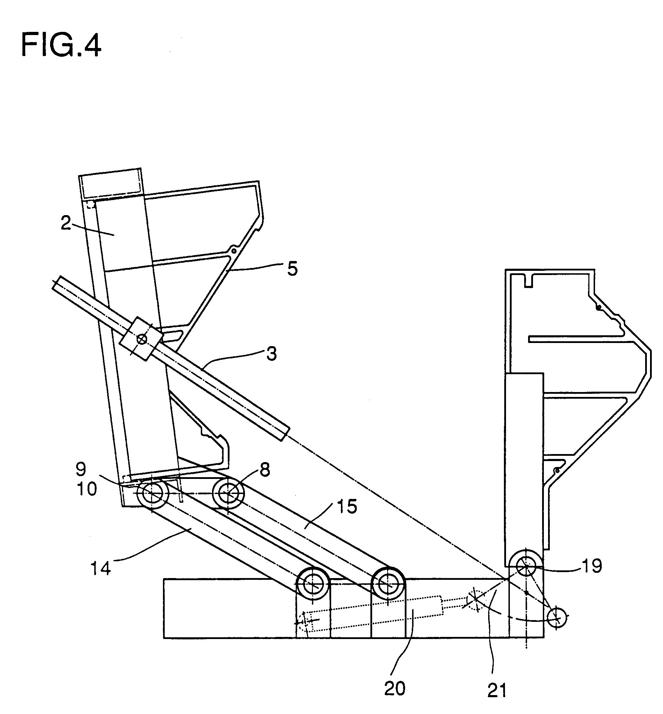

Wenn es bei bestimmten Formen gewünscht wird, die Unterform noch besser, beispielsweise zum Reinigen, zugänglich zu machen, dann kann die Unterform relativ zu dem Unterteil 1 um ein Scharnier 19 schwenkbar sein. Die Schwenkachse dieses Scharniers 19 verläuft vorzugsweise parallel zu den übrigen Schwenkachsen des Formenträgern. Zur Durchführung dieser zusätzlichen Schwenkbewegungen um das Scharnier 19 ist ein hydraulischer Zylinder 20 vorgesehen, an dessen Kolben ein Gestänge 21 befestigt ist, um so, wie in Fig. 4 dargestellt, die Unterform 6 hochzuschwenken. Diese zusätzliche Schwenkbewegung der Unterform erfolgt dann, wenn der Deckel die in Fig. 2 dargestellte Stellung einnimmt.

## Patentansprüche

1. Formenträger zur Herstellung von Formteilen aus Mehrkomponenten-Kunststoffen, insbesondere Polyurethan, mit einem Unterteil (1) zur Aufnahme der Unterform (6), einem Deckel (2) für die Oberform (5) und einem Schwenkgestell, an dem der Deckel (2) durch eine schwenkbar an diesem befestigte hydraulische Kolben- und Zylindereinrichtung (3,13) schwenkbar gelagert ist, dadurch gekennzeichnet, daß das Schwenkgestell durch ein Hebelparallelogramm (4) gebildet ist, dessen zwei untere Schwenkpunkte (17,18) eine ortsfeste Lagerung im Bereich der Unterform bilden und dessen zwei obere Schwenkpunkte (8,10) durch einen Hebelarm (16) gelenkig miteinander verbunden sind, wobei der Deckel (2) an dem Hebelarm schwenkbar gelagert und nach seiner Schwenkung durch die hydraulische Kolben- und Zylindereinrichtung (3,13) mit diesem verriegelbar (bei 9) ist.

2. Formenträger nach Anspruch 1, dadurch gekennzeichnet, daß der der Form (5,6) zugekehrte obere Schwenkpunkt (8) des Hebelparallelogramms (4) mit dem Schenkpunkt des Deckels an dem Hebelarm (16) zusammenfällt.

3. Formenträger nach Anspruch 1 oder 2, dadurch gekennzeichnet, daß der der Form (5,6) abgekehrte, obere Schwenkpunkt (10) des Hebelparallelogramms (4) den Verriegelungspunkt für den Deckel (2) (bei 9) bildet.

4. Formenträger nach einem oder mehreren der vorstehenden Ansprüche, dadurch gekennzeichnet, daß die beiden unteren, ortsfesten Schwenkpunkte (17,18) des Hebelparallelogramms (4) an dem Unterteil (1) im mittleren Bereich vorgesehen sind.

5. Formenträger nach einem oder mehreren der vorstehenden Ansprüche, dadurch gekennzeichnet, daß die an dem Deckel (2) schwenkbar (bei 11) gelagerte Kolben- und Zylindereinrichtung (3) ihre zweite schwenkbare Lagerung (12) an dem Unterteil 1 hat.

6. Formenträger nach einem oder mehreren der vorstehenden Ansprüche, dadurch gekennzeichnet, daß die Unterform (6) in Bezug auf das Unterteil (1) um eine Achse (19) schwenkbar ist, die parallel zu der Schwenkachse des Deckels (2) verläuft.

7. Formenträger nach Anspruch 6, dadurch gekennzeichnet, daß die Schwenkbewegung der Unterform (6) durch einen hydraulischen Zylinder (20) über ein Hebelgestänge (21) erfolgt.

8. Formenträger nach einem oder mehreren der vorstehenden Ansprüche, dadurch gekennzeichnet, daß an jeder Seite ein Hebelparalellogramm (4) und eine hydraulische Kolben- und Zylindereinrichtung (3,13) vorgesehen ist, wobei die entsprechenden Schwenkpunkte (11; 8, 10; 17,18; 12) jeweils auf einer gemeinsamen Achse liegen, wobei diese Achsen sämtlich parallel zueinander verlaufen.

## Claims

1. Mould holder for producing mouldings from muiticomponent plastics, particularly polyurethane, with a lower part (1) for receiving the lower mould (6), a cover (2) for the upper mould (5) and a pivot support, on which is pivotably mounted the cover (2) by a hydraulic piston and cylinder unit (3, 13) fixed pivotably thereto, characterized in that the swivel support is formed by a lever parallelogram (4), whose two lower swivel points (17, 18) form a fixed mounting support in the vicinity of the lower mould and whose two upper swivel points (8, 10) are connected in articulated manner by a lever arm (16), the cover (2) being pivotably mounted on the lever arm and following its pivoting can be locked at (9) by the hydraulic piston and cylinder unit (3, 13) to the same.

2. Mould holder according to claim 1, characterized in that the upper swivel point (8) of the lever parallelogram (4) facing the mould (5, 6) coincides with the swivel point of the cover on the lever arm (16).

3. Mould holder according to claim 1 r 2. characterized in that the upper swivel point (10) of the lever parallelogram (4) remote from the mould (5, 6) at (9) forms the locking point for the cover (2).

4. Mould holder according to one or more of the preceding claims, characterized in that the two lower, fixed swivel points (17, 18) of the lever parallelogram (4) are provided in the central area on the lower part (1).

5. Mould holder according to one or more of the preceding claims, characterized in that the piston and cylinder unit (3) mounted in pivotable manner at (11) on the cover (2) has its second pivotable mounting support (12) on the lower part (1).

6. Mould holder according to one or more of the preceding claims, characterized in that the lower mould (6) is pivotable with respect to the lower part (1) about an axis (19) running parallel to the swivel axis of the cover (2).

7. Mould holder according to claim 6, characterized in that the pivoting movement of the lower mould (6) takes place through a hydraulic cylinder (20) by means of a lever linkage (21).

8. Mould holder according to one or more of the preceding claims, characterized in that on each side is provided a lever parallelogram (4) and a hydraulic piston and cylinder unit (3, 13), the corresponding swivel points (11, 8, 10, 17, 18, 12) being in each case located on a common axis, all the said axes being parallel to one another.

## Revendications

1. Porte-moules pour la fabrication de pièces moulées en matière plastique à plusieurs constituants, et particulièrement en polyuréthanne, présentant une substructure (1) pour le logement du demi-moule inférieur (6), un capot (2) pour le demi-moule supérieur (5) et un bâti articulé, sur lequel est disposé le capot (2) de manière à pouvoir basculer à l'aide d'un dispositif de piston et cylindre hydraulique (3,13), y étant fixé de manière articulée, caractérisé par le fait, que le bâti articulé soit formé d'un parallélogramme articulé (4), dont les deux points de pivotement inférieurs (17,18) forment un logement stationnaire au niveau du demi-moule inférieur et dont les deux points de pivotement supérieurs (8, 10)sont reliés entre eux de manière articulée par un bras de levier (16), le capot (2) étant fixé de manière articulée au bras de lever et, après son basculement par le dispositif de piston et de cylindre hydraulique (3,13), peut être verrouillé avec celui-ci (en 9).

2. Porte-moules selon revendication 1, caractérisé par le fait que le point de pivotement supérieur (8) du parallélogramme articulé (4) dirigé vers le moule (5, 6) coïncide avec le point de pivotement du capot sur le bras de levier (16).

3. Porte-moules selon revendications 1 ou 2, caractérisé par le fait, que le point de pivotement supérieur (10) du parallélogramme articulé (4), détourné du moule (5, 6) constitue le point de verrouillage pour le capot (2) (en 9).

4. Porte-moules, selon une ou plusieurs revendications énumérées ci-dessus, caractérisé par le fait, que les deux points de pivotement inférieurs, stationnaires (17, 18) du parallélogramme articulé (4) soient prévus au niveau de la substructure (1) dans sa partie moyenne.

5. Porte-moules, selon une ou plusieurs revendications énumérées ci-dessus, caractérisé par le fait, que le dispositif de piston et de cylindre (3) disposé de manière articulée (en 11) sur le capot (2) présente sa deuxième articulation (12) sur la substructure 1.

6. Porte-moules, selon une ou plusieurs revendications énumérées ci-dessus, caractérisé par le fait, que le demi-moule inférieur (6) soit pivotant autour d'un axe (19), parallèle à l'axe de pivotement du capot (2), par rapport à la substructure (1).

7. Porte-moules selon revendication 6, caractérisé par le fait, que le mouvement de pivotement du demi-moule inférieur (6) soit effectué à l'aide d'un cylindre hydraulique (20) par une tringle à effet de levier (21).

8. Porte-moules, selon une ou plusieurs revendications énumérées ci-dessus, caractérisé par le fait, qu'un parallélogramme articulé (4) et un dispositif de piston et cylindre hydraulique (3, 13) soient prévus de chaque côté, les points de pivotement correspondants (11; 8, 10; 17, 18; 12) étant disposés sur un axe commun, tous ces axes étant parallèles les uns aux autres.
